(19) Europäisches Patentamt
European Patent Office
Office européen des brevets

(11) Publication number: **0 464 561 B1**

# (12) EUROPEAN PATENT SPECIFICATION

(45) Date of publication of patent specification: **12.04.95**

(51) Int. Cl.$^6$: **C08L 77/00**, C08L 77/02, C08L 77/10, C08L 25/08, C08L 25/12, C08L 25/14, C08L 25/16

(21) Application number: **91110380.2**

(22) Date of filing: **24.06.91**

The file contains technical information submitted after the application was filed and not included in this specification

## (54) Thermoplastic resin composition.

(30) Priority: **27.06.90 JP 171080/90**
**28.03.91 JP 64647/91**

(43) Date of publication of application:
**08.01.92 Bulletin 92/02**

(45) Publication of the grant of the patent:
**12.04.95 Bulletin 95/15**

(84) Designated Contracting States:
**DE FR GB IT NL**

(56) References cited:
**EP-A- 0 332 454**
**EP-A- 0 352 624**
**EP-A- 0 368 345**

**PATENT ABSTRACT OF JAPAN, unexamined applications, C field, vol. 13, no. 461,July 14,1989 THE PATENT OFFICE JAPANESE GOVERNMENT page 3809 C 645**

(73) Proprietor: **SUMITOMO CHEMICAL COMPANY, LIMITED**
**Kitahama 4-chome 5-33**
**Chuo-ku**
**Osaka 541 (JP)**

(72) Inventor: **Koyama, Teruhisa**
**4-18, Hoshigoe-cho**
**Niihama-shi,**
**Ehime-ken (JP)**
Inventor: **Date, Shinji**
**3-636, Ikku-cho 2-chome**
**Niihama-shi,**
**Ehime-ken (JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a thermoplastic resin composition comprising a combination of thermoplastic resins and having various excellent properties.

Thermoplastic resins are used in various fields by utilizing respective properties of each resin. Materials having a higher performance have been recently discovered and proposed by mixing two or more resins of different types.

US -A-4,246,374 (corresponding to GB-A-1,559,132) describes a method for producing a glutarimide polymer and a blend of this polymer with an ABS resin or MBS resin which is an impact resistance-improving agent. US-A-4,415,706 (corresponding to EP-A-109,145) describes a polymer blend comprising polyglutarimide and a polyamide and exhibiting the properties of the respective polymers.

JP-A-22356/1990 describes a thermoplastic resin composition with low gloss comprising polyglutarimide, an ABS resin and a polyamide.

With respect to the blend of the glutarimide polymer and the impact resistance-improving agent described in US-A-4,246,376, the content of the impact resistance-improving agent is increased and the heat resistance which the glutarimide polymer possesses as its distinctive feature becomes poor when still higher impact resistance is required. Also, this blend has poor oil resistance and solvent resistance.

The polymer blend described in US-A-4,415,706 has good heat resistance owned by polyglutarimide and good mechanical strength owned by the polyamide, but it has poor impact resistance.

The resin composition described in JP-A 22356/1990 has good properties owned by a component contained in the highest content among three components, but it does not exhibit good properties owned by other components contained in lower contents.

JP-A-1-1785 46 discloses a thermoplastic resin composition obtained by mixing (A) a polyamide elastomer, (B) an aromatic polyglutarimide, (C) a vinyl polymer and (D) a rubber graft copolymer.

An object of the present invention is to provide a resin composition having a combination of good heat resistance, high stiffness, good impact resistance, good solvent resistance and good oil resistance with good balance.

This and other objects of the present invention are achieved by a thermoplastic resin composition comprising

(A) 1 to 99 parts by weight of a glutarimide polymer or copolymer which comprises 5 to 100 % by mol of repeating units derived from glutarimide and 0 to 95 % by mol of repeating units derived from an $\alpha,\beta$-ethylenically unsaturated monomer, and which further contains an acid and/or acid anhydride unit in an amount of 0.5 to 10% by mol

(B) 1 to 99 parts by weight of a polyamide,

(C) 0 to 95 parts by weight of a rubber-containing copolymer obtainable by polymerizing, in the presence of (1) 10 to 80 % by weight of a rubbery polymer, (2) 20 to 90 % by weight of at least one $\alpha,\beta$-ethylenically unsaturated monomer selected from the group consisting of an aromatic $\alpha,\beta$-ethylenically unsaturated monomer, a cyano group-containing $\alpha,\beta$-ethylenically unsaturated monomer and an $\alpha,\beta$-ethylenically unsaturated carboxylic acid ester monomer, and

(D) 0.1 to 25 part by weight of an epoxy group-containing copolymer per 100 parts by weight of the total amount of components (A), (B) and (C).

The glutarimide unit of the glutarimide copolymer (A) used in the present invention is preferably expressed by the general formula:

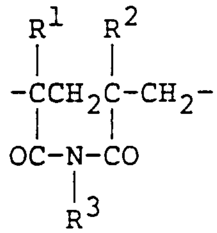

(I)

wherein $R^1$ and $R^2$ are the same or different and each a hydrogen atom or a methyl group, and $R^3$ is a hydrogen atom or an aliphatic, aromatic or alicyclic hydrocarbon group having 1 to 20 carbon atoms. Among them, a unit (I) wherein the $R^3$ group is the hydrogen atom or the methyl group imparts excellent heat resistance, and a unit (I) wherein the $R^3$ group is a cyclohexyl group provides an excellent composition

having a low moisture absorptivity. The glutarimide copolymer (A) contains the glutarimide unit in an amount of 5 to 100 % by mol, preferably 20 to 100 % by mol based on the copolymer (A). If the amount of the glutarimide unit is smaller than 5 % by mol, the resin composition has poor heat resistance.

Specific examples of the monomer which forms the $\alpha,\beta$-ethylenically unsaturated monomer unit of the glutarimide copolymer (A) are (meth)acrylic acid esters, (meth)acrylic acid, styrene, $\alpha$-methylstyrene, vinyltoluene, chlorostyrene and acrylonitrile. Specific examples of the (meth)acrylic acid esters are methyl (meth)acrylate, ethyl (meth)acrylate, propyl (meth)acrylate, n-butyl (meth)acrylate, isobutyl (meth)acrylate, tert.-butyl (meth)acrylate, dodecyl (meth)acrylate, cyclohexyl (meth)acrylate, norbornyl (meth)acrylate, 2-ethylhexyl (meth)acrylate and benzyl (meth)acrylate. The glutarimide copolymer (A) contains this monomer unit in an amount of 0 to 95 % by mol, preferably 0 to 80 % by mol based on the copolymer (A).

These units may be used independently or in combination.

The weight average molecular weight of the glutarimide copolymer (A) is usually 40,000 to 500,000, preferably 40,000 to 200,000. If the molecular weight is smaller than 40,000, the mechanical strength is deteriorated and if it is larger than 500,000, the molding workability is poor.

The glutarimide copolymer (A) can be prepared by a conventional method such as methods described in US-A-4,246,374 and JP-A-89705/1987.

For example, the glutarimide copolymer (A) can be prepared by melting a homopolymer or copolymer comprising, as an essential component, (meth)acrylic acid or a (meth)acrylic acid ester and then reacting the melt with an imidating agent. Specific examples of the imidating agent are ammonia, methylamine, ethylamine, butylamine, hexylamine, octylamine, nonylamine, decylamine, benzylamine, cyclohexylamine, aniline, halogenated aniline, urea and dimethylurea. The glutarimide copolymer prepared by the above method contains an acid and/or acid anhydride unit, and such unit is preferably contained in an amount up to 10 % by mole, more preferably 0.5 to 10 % by mole. The acid and/or acid anhydride in the glutarimide copolymer (A) may be (meth)acrylic acid, a six-membered ring acid and anhydrides thereof.

The larger an amount of the glutarimide copolymer (A) is, the higher the heat resistance and the stiffness of the composition is.

The composition of the present invention contains the glutarimide copolymer (A) in an amount of 1 to 99 parts by weight, preferably 3 to 90 parts by weight.

The polyamide (B) is a known one. For example, it may be a product obtainable by a polymerization of an at least three-membered ring lactam, and a polycondensation of a polymerizable $\omega$-amino acid, a polycondensation of a dibasic acid with a diamine.

Specific examples of the polyamide (B) are a polymer of $\epsilon$-caprolactam, amino caproic acid, heptanelactam, 7-aminoheptanoic acid, 11-aminoundecanoic acid; and a polymer of a diamine such as hexamethylenediamine, nonamethylenediamine, undecamethylenediamine, dodecamethylenediamine and m-xylylenediamine with a dicarboxylic acid such as terephthalic acid, isophthalic acid, adipic acid, sebacic acid, dodecanedibasic acid and glutaric acid. In other words, the polyamide (B) includes aliphatic polyamides such as polyamide-6, polyamide-6,6, polyamide-6,10, polyamide-11, polyamide-12 and polyamide-6,12; and aromatic polyamides such as polyhexamethylenediamine terephthalamide, polyhexamethylenediamine isophthalamide, xylene group-containing polyamide. The polyamide (B) may be used alone or in combination.

The polyamide (B) preferably has a molecular weight of 5,000 to 1,000,000, more preferably 10,000 to 500,000.

The larger an amount of the polyamide (B) is, the higher the oil resistance, solvent resistance and impact resistance of the composition are.

The composition of the present invention contains the polyamide (B) in an amount of 1 to 99 parts by weight, preferably 10 to 97 parts by weight.

The rubber-containing copolymer (C) used in the present invention is a polymer obtainable by polymerizing an $\alpha,\beta$-ethylenically unsaturated monomer in the presence of a rubbery polymer. The $\alpha,\beta$-ethylenically unsaturated monomer is at least one selected from the group consisting of aromatic $\alpha,\beta$-ethylenically unsaturated monomers such as styrene and $\alpha$-methylstyrene; cyano group-containing $\alpha,\beta$-ethylenically unsaturated monomers such as acrylonitrile and methacrylonitrile; and $\alpha,\beta$-ethylenically unsaturated carboxylic acid ester monomers such as methyl (meth)acrylate and ethyl (meth)acrylate. Maleimide, maleic anhydride and (meth)acrylic acid may be used in addition to the $\alpha,\beta$-ethylenically unsaturated monomer. The rubbery polymer may be a polybutadiene rubber, an acrylonitrile-butadiene rubber, a styrene-butadiene rubber, an acrylic rubber and an ethylene-propylene-diene rubber. A conventional polymerizing method such as an emulsion polymerization, a bulk polymerization and a bulk-suspension polymerization can be used.

Specific examples of the rubber-containing copolymer (C) are an ABS resin, an MBS resin and an AES resin.

The rubber-containing copolymer (C) contains the rubbery polymer in an amount of 10 to 80 % by weight, preferably 30 to 70 % by weight based on the copolymer (C). If the amount of the rubbery polymer is smaller than 10 % by weight, the composition has poor impact resistance. If it is larger than 80 % by weight, the composition has low stiffness and poor heat resistance.

The larger an amount of the rubber-containing copolymer (C) is, the higher the impact resistance of the composition is.

The composition of the present invention contains the rubber-containing copolymer (C) in an amount of 0 to 95 parts by weight, preferably 1 to 90 parts by weight.

The epoxy group-containing copolymer (D) used in the present invention is a copolymer comprising epoxy group-containing $\alpha,\beta$-ethylenically unsaturated monomer units and other $\alpha,\beta$-ethylenically unsaturated monomer units.

A composition of the epoxy group-containing copolymer (D) is not especially limited. Usually, the epoxy group-containing copolymer (D) contains the epoxy group-containing $\alpha,\beta$-ethylenically unsaturated monomer units in an amount of 0.1 to 50 % by weight, preferably 1 to 30 % by weight based on the copolymer (D). The epoxy group-containing $\alpha,\beta$-ethylenically unsaturated monomer may be, for example, unsaturated glycidyl esters of the formula:

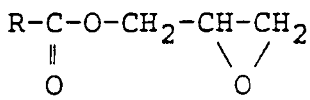

(II)

wherein R is a hydrocarbon group having an $\alpha,\beta$-ethylenically unsaturated bond and 2 to 18 carbon atoms, and unsaturated glycidyl ethers of the formula:

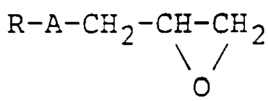

(III)

wherein R is the same as defined above, and

A is an alkylene oxide group having 1 to 6 carbon atoms or a phenylene oxide group. Specific examples of the epoxy group-containing $\alpha,\beta$-ethylenically unsaturated monomer are glycidyl (meth)acrylate, itaconic acid glycidyl ester, allylglycidyl ether, 2-methylallylglycidyl ether and styrene-p-glycidyl ether.

The other $\alpha,\beta$-ethylenically unsaturated monomer may be, for example, olefins, vinyl esters of aliphatic carboxylic acids having 2 to 6 carbon atoms, (meth)acrylic acid esters, maleic acid esters, fumaric acid esters, vinyl halides, styrenes, nitriles, vinyl ethers and acrylamides.

Specific examples of the other $\alpha,\beta$-ethylenically unsaturated monomer are ethylene, propylene, butene-1, vinyl acetate, methyl (meth)acrylate, ethyl (meth)acrylate, dimethyl maleate, diethyl fumarate, vinyl chloride, vinylidene chloride, styrene, acrylonitrile, isobutyl vinyl ether and acrylamide. In order to improve the impact resistance at a low temperature by lowering a glass transition point, it is suitable to combine two or more components such as ethylene-vinyl acetate and ethylene-methyl acrylate.

A typical example of the epoxy group-containing copolymer (D) is an ethylene-glycidyl methacrylate copolymer.

The molecular weight of the epoxy group-containing copolymer (D) may be 10,000 to 1,000,000 preferably 20,000 to 800,000.

The epoxy group-containing copolymer (D) can be prepared by any of various conventional methods such as a method for preparing a random copolymer by conducting a bulk polymerization or a radical polymerization in an inert organic solvent of the epoxy group-containing $\alpha,\beta$-ethylenically unsaturated monomer and the other $\alpha,\beta$-ethylenically unsaturated monomer; and a method for preparing a graft copolymer by impregnating the epoxy group-containing $\alpha,\beta$-ethylenically unsaturated monomer into a polymer of the other $\alpha,\beta$-ethylenically unsaturated monomer and then conducting a radical polymerization.

Concretely, the epoxy group-containing copolymer (D) can be prepared by a method for copolymerizing ethylene and the epoxy group-containing $\alpha,\beta$-ethylenically unsaturated monomer in the presence of a radical-generating agent at a pressure of 500 to 4,000 atmospheres and a temperature of 100 to 300 °C according the process for the production of high pressure polyethylene; and a method comprising melting

polypropylene in an extruder, kneading it with the epoxy group-containing $\alpha,\beta$-ethylenically unsaturated monomer and a radical-generating agent and then conducting a graft polymerization.

The composition contains the epoxy group-containing copolymer (D) in an amount of 0.1 to 25 parts by weight, preferably 1 to 20 parts by weight, per 100 parts by weight of total amounts of the components (A), (B) and (C). If the amount of the epoxy group-containing copolymer (D) is smaller than 0.1 part by weight, the composition has poor impact resistance. If it is larger than 25 parts by weight, the composition has poor heat resistance, low stiffness and a low molding workability.

For compounding the polymers (A), (B), (C) and (D) to prepare the composition, any of conventional methods can be used. The conventional methods include a method comprising mixing the polymer solutions and then distilling the solvent or introducing the solutions in a nonsolvent to precipitate the composition; a method comprising melting and kneading the polymers in a single-screw or twin-screw extruder or various kinds of kneaders; and a method comprising directly kneading the polymers during the melt processing operation such as in an extrusion molding or injection molding.

The thermoplastic resin composition of the present invention may contain conventional antioxidants such as a hindered phenol antioxidant, a phosphorus antioxidant and a sulfur antioxidant, weather-resisting agents such as an ultraviolet light absorber and a hindered amine photostabilizer, lubricants, antistatic agents, flame retardants, colorants and pigments. In addition, the composition of the present invention may contain reinforcing fibers such as a glass fiber and inorganic fillers according to the applications.

The thermoplastic resin composition of the present invention has an excellent combination of good heat resistance as typified by a heat distortion temperature, good impact resistance, high stiffness as typified by a flexural modulus, good oil resistance and good solvent resistance. By elaborating their properties, the resin composition of the present invention can be used for various applications such as parts for an electrical apparatus, automobile parts such as interior fittings and exterior panels and sundries.

The present invention is illustrated by the following Examples.

Methods for measurement used in Examples were as follows:

The heat distortion temperature was measured under a load of 18.6 kg/cm$^2$ in accordance with ASTM D 648.

The notched Izod impact strength was measured in accordance with ASTM D 256.

The flexural modulus was measured in accordance with ASTM D 790.

Oil resistance was measured by dropping a brake oil of an automobile on a test piece, leaving it at a room temperature for 4 hours and then observing the test piece with naked eyes. The results of evaluation are as follows:

A: The test piece is not eroded.
B: The test piece is slightly eroded.
C: The test piece is significantly eroded and has a rough surface.

Examples 1 to 7 and Comparative Examples 1 to 3

After compounding the amounts indicated in following Table 1 of a glutarimide copolymer (KAMAX® T-150 manufactured by Rohm & Haas Co., content of glutarimide units: 75 mol %, acid value: 5 mol %), nylon-6 as a polyamide (UBE NYLON® 1013B manufactured by Ube Industries, Ltd., relative viscosity: 2.6), an epoxy group-containing copolymer (melt flow index: 7 (2.16 kg, 190 °C, 10 min.)) which was prepared from 83 % by weight of ethylene, 5 % by weight of vinyl acetate and 12 % by weight of glycidyl methacrylate according to the method described in Japanese Patent Kokai Publication No. 23490/1972, pellets of the resin composition were obtained by kneading and extruding the composition at a resin temperature of 250 °C in a twin-screw extruder. Test pieces were prepared by molding the pellets by means of an injection molding machine at a cylinder temperature of 260 °C and a mold temperature of 60 °C. The properties of the test pieces were evaluated. The results are shown in Table 1.

Table 1

| Example No. | Glutarimide copolymer (pbw) | Polyamide (pbw) | Epoxy group-containing copolymer (pbw) | Heat distortion temperature (°C) | Izod impact strength (kgf•cm/cm) | Flexural modulus ($kgf/cm^2$) |
|---|---|---|---|---|---|---|
| 1 | 5 | 95 | 3 | 62 | 8 | 20300 |
| 2 | 10 | 90 | 3 | 67 | 7 | 20900 |
| 3 | 20 | 80 | 15 | 67 | 13 | 19700 |
| 4 | 20 | 80 | 5 | 72 | 8 | 20700 |
| 5 | 20 | 80 | 3 | 69 | 8 | 20900 |
| 6 | 20 | 80 | 1 | 85 | 4 | 23300 |
| 7 | 40 | 60 | 3 | 107 | 3 | 24600 |
| Com.1 | 0 | 100 | 3 | 54 | 8 | 21300 |
| Com.2 | 60 | 40 | 0 | 126 | 2 | 29200 |
| Com.3 | 20 | 80 | 0 | 87 | 2 | 20300 |

Examples 8 to 13 and Comparative Examples 4 to 9

After compounding the amounts indicated in following Table 2 of a glutarimide copolymer (KAMAX® T-150), nylon-6 as a polyamide (UBE NYLON® 1013B manufactured by Ube Industries, Ltd.), an ABS resin as a rubber-containing copolymer (KURARASTIK® MV manufactured by Sumitomo Naugatucks Co. Ltd., melt

flow index under 10 kg at 220 °C: 9) and an epoxy group-containing copolymer (the same as in Example 1), pellets of the resin composition were obtained by kneading and extruding the composition at a resin temperature of 250 °C in a twin-screw extruder. Test pieces were prepared by molding the pellets by means of an injection molding machine at a cylinder temperature of 260 °C and a mold temperature of 60 °C. The properties of the test pieces were evaluated. The results are shown in Table 2.

Table 2

| Example No. | Glutarimide copolymer (wt%) | Polyamide (wt%) | Rubber-containing copolymer (wt%) | Epoxy group-containing copolymer (wt%) | Heat distortion temperature (°C) | Izod impact strength (kgf•cm/cm) | Flexural modulus ($kgf/cm^2$) | Oil resistance |
|---|---|---|---|---|---|---|---|---|
| 8 | 10 | 45 | 42 | 3 | 67 | 26 | 19900 | A |
| 9 | 20 | 25 | 54 | 1 | 81 | 12 | 22500 | A |
| 10 | 20 | 25 | 52 | 3 | 79 | 13 | 21200 | A |
| 11 | 20 | 25 | 50 | 5 | 75 | 16 | 20200 | A |
| 12 | 20 | 40 | 37 | 3 | 76 | 17 | 22400 | A |
| 13 | 30 | 35 | 32 | 3 | 81 | 12 | 24300 | A |
| Com.4 | 10 | 45 | 45 | 0 | 71 | 8 | 19000 | B |
| Com.5 | 20 | 25 | 55 | 0 | 84 | 11 | 21700 | C |
| Com.6 | 20 | 40 | 40 | 0 | 78 | 9 | 20500 | B |
| Com.7 | 30 | 35 | 35 | 0 | 84 | 7 | 23800 | B |
| Com.8 | 20 | 0 | 77 | 3 | 86 | 16 | 19500 | B |
| Com.9 | 0 | 50 | 47 | 3 | 67 | 3 | 18700 | C |

## Claims

1. A thermoplastic resin composition comprising
   (A) 1 to 99 parts by weight of a glutarimide polymer or copolymer which comprises 5 to 100 % by mol of repeating units derived from glutarimide and 0 to 95 % by mol of repeating units derived from an α,β-ethylenically unsaturated monomer and which further contains an acid and/or acid anhydride unit in an amount of 0.5 to 10 % by mol,
   (B) 1 to 99 parts by weight of a polyamide,
   (C) 0 to 95 parts by weight of a rubber-containing copolymer obtainable by polymerizing, in the presence of (1) 10 to 80 % by weight of a rubbery polymer, (2) 20 to 90 % by weight of at least one α,β-ethylenically unsaturated monomer selected from the group consisting of an aromatic α,β-ethylenically unsaturated monomer, a cyano group-containing α,β-ethylenically unsaturated monomer and an α,β-ethylenically unsaturated carboxylic acid ester monomer, and
   (D) 0.1 to 25 part by weight of an epoxy group-containing copolymer per 100 parts by weight of the total amount of components (A), (B) and (C).

2. The thermoplastic resin composition according to claim 1, wherein the glutarimide unit of the glutarimide copolymer (A) is expressed by the general formula:

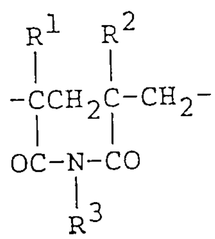

(I)

wherein $R^1$ and $R^2$ are hydrogen atoms or methyl groups, and $R^3$ is a hydrogen atom or an aliphatic, aromatic or alicyclic hydrocarbon group having 1 to 20 carbon atoms.

3. The thermoplastic resin composition according to claim 1 or 2, wherein the acid and/or acid anhydride in the glutarimide copolymer (A) is at least one selected from the group consisting of (meth)acrylic acid, a six-membered ring acid and anhydrides thereof.

4. The thermoplastic resin composition according to any of claims 1 to 3, wherein the α,β-ethylenically unsaturated monomer in the glutarimide copolymer (A) is at least one selected from the group consisting of (meth)acrylic acid esters, (meth)acrylic acid, styrene, α-methylstyrene, vinyltoluene, chlorostyrene and acrylonitrile.

5. The thermoplastic resin composition according to any of claims 1 to 4, wherein the aromatic α,β-ethylenically unsaturated monomer for preparing the rubber-containing copolymer (C) is at least one selected from the group consisting of styrene and α-methylstyrene.

6. The thermoplastic resin composition according to any of claims 1 to 4, wherein the α,β-ethylenically unsaturated carboxylic acid ester monomer for preparing the rubber-containing copolymer (C) is at least one selected from the group consisting of methacrylate ester and acrylate ester.

7. The thermoplastic resin composition according to any of claims 1 to 6, wherein the rubbery polymer for preparing the rubber-containing copolymer (C) is at least one selected from the group consisting of a polybutadiene rubber, an acrylonitrile-butadiene rubber, a styrene-butadiene rubber, an acrylic rubber and an ethylene-propylene-diene rubber.

8. The thermoplastic resin composition according to any of claims 1 to 7, wherein the epoxy group-containing copolymer (D) is a copolymer comprising epoxy group-containing α,β-ethylenically unsaturated monomer units in an amount of 0.1 to 50 % by weight and other α,β-ethylenicallyunsaturated

monomer units in an amount of 50 to 99.9 % by weight.

9. The thermoplastic resin composition according to claim 8, wherein the epoxy group-containing $\alpha,\beta$-ethylenically unsaturated monomer is at least one selected from the group consisting of glycidyl (meth)acrylate, itaconic acid glycidyl ester, allylglycidyl ether, 2-methylallylglycidyl ether and styrene-p-glycidyl ether.

**Patentansprüche**

1. Thermoplastische Harzzusammensetzung, umfassend
(A) 1 bis 99 Gew.-Teile eines Glutarsäureimidpolymeren oder -copolymeren, das 5 bis 100 Mol-% sich wiederholende, von Glutarsäureimid abgeleitete Einheiten und 0 bis 95 Mol-% sich wiederholende, von einem $\alpha,\beta$-ethylenisch ungesättigten Monomeren abgeleitete Einheiten umfaßt und das des weiteren eine Säure- und/oder eine Säureanhydrideinheit in einer Menge von 0,5 bis 10 Mol-% enthält,
(B) 1 bis 99 Gew.-Teile eines Polyamids,
(C) 0 bis 95 Gew.-Teile eines Kautschuk enthaltenden Copolymeren, erhältlich durch Polymerisation, in Gegenwart von (1) 10 bis 80 Gew.-% eines kautschukartigen Polymeren, von
(2) 20 bis 90 Gew.-% mindestens eines $\alpha,\beta$-ethylenisch ungesättigten Monomeren, ausgewählt aus einem aromatischen $\alpha,\beta$-ethylenisch ungesättigten Monomeren, einem Cyanogruppen enthaltenden $\alpha,\beta$-ethylenisch ungesättigten Monomeren und einem $\alpha,\beta$-ethylenisch ungesättigten Carbonsäureestermonomeren und
(D) 0,1 bis 25 Gew.-Teile eines Epoxidgruppen enthaltenden Copolymeren pro 100 Gew.-Teilen der Gesamtmenge der Bestandteile (A), (B) und (C).

2. Thermoplastische Harzzusammensetzung nach Anspruch 1, worin die Glutarsäureimideinheit des GlutarsäureimidCopolymeren (A) wiedergegeben wird durch die allgemeine Formel:

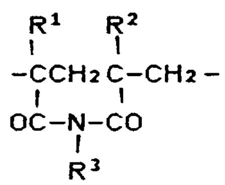

(I)

worin $R^1$ und $R^2$ Wasserstoffatome oder Methylgruppen bedeuten und $R^3$ ein Wasserstoffatom oder einen aliphatischen, aromatischen oder alicyclischen Kohlenwasserstoffrest mit 1 bis 20 Kohlenstoffatomen darstellt.

3. Thermoplastische Harzzusammensetzung nach Anspruch 1 oder 2, worin die Säure und/oder das Säureanhydrid im Glutarsäureimid-Copolymeren (A) mindestens eine (Meth)acrylsäure, eine Säure mit einem sechsgliedrigen Ring oder ein Anhydrid davon ist.

4. Thermoplastische Harzzusammensetzung nach einem der Ansprüche 1 bis 3, worin das $\alpha,\beta$-ethylenisch ungesättigte Monomere im Glutarsäureimid-Copolymeren (A) mindestens ein (Meth)acrylsäureester, (Meth)acrylsäure, Styrol, $\alpha$-Methylstyrol, Vinyltoluol, Chlorstyrol oder Acrylnitril ist.

5. Thermoplastische Harzzusammensetzung nach einem der Ansprüche 1 bis 4, worin das aromatische $\alpha,\beta$-ethylenisch ungesättigte Monomere zur Herstellung des Kautschuk enthaltenden Copolymeren (C) mindestens ein Styrol oder $\alpha$-Methylstyrol ist.

6. Thermoplastische Harzzusammensetzung nach einem der Ansprüche 1 bis 4, worin das $\alpha,\beta$-ethylenisch ungesättigte Carbonsäureestermonomere zur Herstellung des Kautschuk enthaltenden Copolymeren (C) mindestens ein Methacrylatester oder Acrylatester ist.

7. Thermoplastische Harzzusammensetzung nach einem der Ansprüche 1 bis 6, worin das kautschukartige Polymere zur Herstellung des Kautschuk enthaltenden Copolymeren (C) mindestens ein Polybutadienkautschuk, ein Acrylnitril-Butadien-Kautschuk, ein Styrol-Butadien-Kautschuk, ein Acrylkautschuk oder ein Ethylen-Propylen-Dien-Kautschuk ist.

**8.** Thermoplastische Harzzusammensetzung nach einem der Ansprüche 1 bis 7, worin das Epoxidgruppen enthaltende Copolymere (D) ein Copolymeres ist, das Epoxidgruppen enthaltende $\alpha,\beta$-ethylenisch ungesättigte Monomereinheiten in einer Menge von 0,1 bis 50 Gew.-% und andere $\alpha,\beta$-ethylenisch ungesättigte Monomereinheiten in einer Menge von 50 bis 99,9 Gew.-% umfaßt.

**9.** Thermoplastische Harzzusammensetzung nach Anspruch 8, worin das Epoxidgruppen enthaltende $\alpha,\beta$-ethylenisch ungesättigte Monomere mindestens ein Glyzidyl(meth)acrylat, Itaconsäureglyzidylester, Allylglyzidyläther, 2-Methylallylglyzidyläther oder Styrol-p-glyzidyläther ist.

**Revendications**

**1.** Composition de résines thermoplastiques comprenant

(A) de 1 à 99 parties en masse d'un polymère ou copolymère de glutarimide qui comprend de 5 à 100 % en mol de motifs de répétition provenant du glutarimide et de 0 à 95 % en mol de motifs de répétition provenant d'un monomère $\alpha,\beta$-éthyléniquement insaturé et qui contient de plus un motif acide et/ou anhydride d'acide à raison de 0,5 à 10 % en mol,

(B) de 1 à 99 parties en masse d'un polyamide,

(C) de 0 à 95 parties en masse d'un copolymère contenant du caoutchouc, susceptible d'être obtenu par polymérisation, en présence de (1) 10 à 80 % en masse d'un polymère du genre caoutchouc, (2) 20 à 90 % en masse d'au moins un monomère $\alpha,\beta$-éthyléniquement insaturé choisi dans le groupe constitué d'un monomère aromatique $\alpha,\beta$-éthyléniquement insaturé, d'un monomère $\alpha,\beta$-éthyléniquement insaturé contenant un groupement cyano et d'un monomère $\alpha,\beta$-éthyléniquement insaturé d'ester d'acide carboxylique et

(D) de 0,1 à 25 parties en masse d'un copolymère contenant des groupements époxy pour 100 parties en masse de la quantité totale des composants (A), (B) et (C).

**2.** Composition de résines thermoplastiques selon la revendication 1, dans laquelle on exprime le motif glutarimide du copolymère de glutarimide (A) par la formule générale :

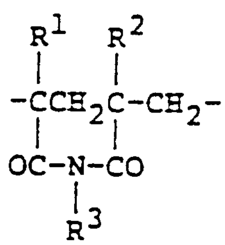

(I)

dans laquelle $R^1$ et $R^2$ représentent des atomes d'hydrogène ou des groupements méthyle et $R^3$ représente un atome d'hydrogène ou un groupement hydrocarboné aliphatique, aromatique ou alicyclique en $C_1$-$C_{20}$.

**3.** Composition de résines thermoplastiques selon la revendication 1 ou 2, dans laquelle l'acide et/ou l'anhydride d'acide du copolymère de glutarimide (A) est au moins un élément choisi dans le groupe constitué de l'acide (méth)acrylique, d'un acide d'un noyau à six chaînons et de leurs anhydrides.

**4.** Composition de résines thermoplastiques selon l'une quelconque des revendications 1 à 3, dans laquelle le monomère $\alpha,\beta$-éthyléniquement insaturé du copolymère de glutarimide (A) est au moins un élément choisi dans le groupe constitué des esters d'acide (méth)acrylique, de l'acide (méth)acrylique, du styrène, de l'$\alpha$-méthylstyrène, du vinyltoluène, du chlorostyrène et de l'acrylonitrile.

**5.** Composition de résines thermoplastiques selon l'une quelconque des revendications 1 à 4, dans laquelle le monomère aromatique $\alpha,\beta$-éthyléniquement insaturé, destiné à la préparation du copolymère contenant du caoutchouc (C), est au moins un élément choisi dans le groupe constitué du styrène et de

l'α-méthylstyrène.

6. Composition de résines thermoplastiques selon l'une quelconque des revendications 1 à 4, dans laquelle le monomère $\alpha,\beta$-éthyléniquement insaturé d'ester d'acide carboxylique, destiné à la préparation du copolymère contenant du caoutchouc (C), est au moins un élément choisi dans le groupe constitué de l'ester méthacrylate et de l'ester acrylate.

7. Composition de résines thermoplastiques selon l'une quelconque des revendications 1 à 6, dans laquelle le polymère du genre caoutchouc, destiné à la préparation du copolymère contenant du caoutchouc (C), est au moins un élément choisi dans le groupe constitué d'un caoutchouc de polybutadiène, d'un caoutchouc d'acrylonitrile-butadiène, d'un caoutchouc de styrène-butadiène, d'un caoutchouc acrylique et d'un caoutchouc d'éthylène-propylène-diène.

8. Composition de résines thermoplastiques selon l'une quelconque des revendications 1 à 7, dans laquelle le copolymère contenant des groupements époxy (D) est un copolymère comprenant des motifs monomère $\alpha,\beta$-éthyléniquement insaturé contenant un groupement époxy à raison de 0,1 à 50 % en masse et d'autres motifs monomère $\alpha,\beta$-éthyléniquement insaturé à raison de 50 à 99,9 % en masse.

9. Composition de résines thermoplastiques selon la revendication 8, dans laquelle le monomère $\alpha,\beta$-éthyléniquement insaturé contenant un groupement époxy est au moins un élément choisi dans le groupe constitué du (méth)acrylate de glycidyle, de l'ester glycidylique d'acide itaconique, de l'allylglycidyléther, du 2-méthylallylglycidyléther et du styrène-p-glycidyléther.